# EUROPÄISCHE PATENTANMELDUNG

(11) **EP 1 967 298 A2**
(43) Veröffentlichungstag der Anmeldung: **10.09.2008**
(21) Anmeldenummer: 08003611.4
(22) Anmeldetag: 28.02.2008
(51) Int. Cl.: B09B 3/00, B09B 1/00, B65D 88/16

(54) **Verfahren und Einrichtung zum Konditionieren von im Aggregatzustand einer Flüssigkeit anfallenden zu entsorgenden Abfallstoffen**

(30) Priorität: 03.03.2007 DE 102007010832
(71) Anmelder: Nehlsen GmbH & Co. KG, 28237 Bremen (DE)
(72) Erfinder: Standke, Siegfried, Dipl.-Ing, 15749 Mittenwalde (DE)
(74) Vertreter: Burghardt, Dieter

(57) **Zusammenfassung**

Die Einrichtung besteht aus einem der Aufnahme von Abfallstoffen dienenden inneren Körper (1) und aus einem, gegenüber dem Körper (1) größeren äußeren Behälter (3) mit einer äußeren Gefäßwandung (4), wobei der innere Körper (1) gegenüber dem äußeren Behälter (3) in diesem zentriert und mit einem definierten Abstand zwischen der Gefäßwandung (4) des inneren Körpers (1) und der Gefäßwandung (4) des äußeren Behälters (3) mit einem definierten Randbereich (5) angeordnet ist und zwischen der Gefäßwandung (4) des inneren Körpers (1) und der Gefäßwandung (4) des äußeren Behälters (3) im Randbereich (5) eine den inneren Körper vollständig umschließende Schutzmasse vorgesehen ist.

## Beschreibung

Die Erfindung betrifft ein Verfahren und eine Einrichtung zum Konditionieren von im zeitweisen Aggregatzustand einer Flüssigkeit anfallenden Abfallstoffen aus einem technologischen Verfahren zwecks einer sicheren Weiterbehandlung dieser Abfallstoffe bis zur Endlagerung.

Es ist bekannt, daß Abfälle einerseits zur Entsorgung und andererseits zur Einschränkung von Senkungsschäden an der Oberfläche in Gebieten, in denen Bodenschätze untertägig abgebaut wurden, in die vorhandenen Hohlräume eines der Endlagerung dienenden Versatzbergwerkes zielgerichtet verfüllt oder in diese eingelagert werden. Im laufenden Betrieb benutzt man dafür taubes Gestein, oder, in stillgelegten Bergwerken, Haldenrückstände oder Fremdmaterial als Ersatz für die abgebauten Bodenschätze.

Das einzubringende Fremdmaterial muß für den entsprechenden Einlagerungszweck geeignet sein. Deshalb unterliegt das für den Einsatz in stillgelegten, als Versatzbergwerke weiter betriebenen Bergwerken vorgesehene Fremdmaterial der staatlich organisierten Genehmigung und Überwachung.

Letztlich soll das nachträglich versetzte Material Stützfunktionen erfüllen, mit dem Wirtgestein verträglich sein, keine umweltrelevanten Umweltschäden bewirken sowie im Versatzbetrieb die Grubenwetter nicht beeinflussen und es muß in Struktur und Konsistenz die Versatzmöglichkeiten zulassen.

Um das große Hohlraumpotential zur untertätigen Deponierung von speziellen Abfällen nutzen zu können, werden diese Abfälle verfahrenstechnisch so behandelt oder verpackt, daß die Eignung durch Sekundärmaßnahmen entsteht.

Auch spezielle Abfälle können derartige Ansprüche erfüllen und werden deshalb in Stahlbehältnissen und/oder Big Bag verpackt.

Es ist auch möglich und bekannt, in einer flüssigen Phase anfallene Restsalze aus der Biodiesel Fabrikation in Stahlbehälter aufzunehmen und in diesen in Versatzbergwerken zu deponieren. Weiterhin ist es möglich, andere Abfälle in Big Bags aufzunehmen und in diesen in Versatzbergwerken zu deponieren.

Die Benutzung von verlorenen Stahlbehältern ist ökonomisch unrentabel, weshalb für geeignete Abfälle auch Big Bag einsetzbar sind.

Sofern die bekannten Big Bag zum Konditionieren verwendet wurden, haben die darin befindlichen Abfälle kein Brand- und kein Geruchspotential aufgewiesen. Abfallstoffe, von denen eine Brandgefahr, eine starke Geruchsbelästigung oder relevante gesundheitsschädigende Wirkungen ausgehen, konnten in Big Bag nicht verbracht werden. Aus diesen Erfahrungen heraus hat es die Fachwelt abgelehnt, für die Konditionierung von Gefahrgut-Abfallstoffe diese Art von Konditionierungsmittel einzusetzen. Mit den bekannten herkömmlichen Mitteln glaubte die Fachwelt das Problem der vorgenannten, von dem belasteten Abfallstoffen ausgehenden Gefahren nicht beherrschen zu können.

Das Ziel der Erfindung besteht darin, in einem Herstellungsprozeß aus technologischen Gründen im zeitweisen Aggregatzustand einer Flüssigkeit anfallende Abfallstoffe einer Endlagerung zu zuführen und deshalb diese mit einem vertretbaren technischen Aufwand, d.h. kostengünstig zu konditionieren und diese für eine sichere Endlagerung außerhalb des Ortes des Anfallens des Abfallstoffes nach einer Konditionierung deren Transportfähigkeit zu garantieren.

Der Erfindung liegt die Aufgabe zugrunde, ein Verfahren zur Vorbereitung einer Entsorgung und zur Durchführung des Verfahrens eine geeignete Einrichtung zu entwickeln, mit der in flüssiger Form anfallende Abfallstoffe abgesichert konditioniert werden können und diese anschließend zur sicheren Einlagerung in ein als Endlager vorgesehenes Versatzbergwerk gebracht werden können.

Diese Aufgabe wurde erfindungsgemäß durch die im kennzeichnenden Teil des Anspruches 1 genannten technischen Mittel gelöst. Die weiteren Ansprüche enthalten Ausführungen der erfinderischen Lösung nach Anspruch 1.

Die Erfindung soll nachfolgend an einem Ausführungsbeispiel näher erläutert werden. In der zugehörigen Zeichnung ist ein erfindungsgemäß ausgestalteter Versatzkörper dargestellt.

Bei der Fabrikation von Biodiesel entstehen Restsalze. Infolge der hohen Salzfracht ist eine Ablagerung dieser Restsalze auf übertägigen Deponien nicht zulässig. Als Entsorgungsweg ist somit eine untertägige Ablagerung indiziert.

Die direkte Einlagerung in Versatzbergwerke scheitert aber daran, daß Anteile der Restsalze zur Entzündung neigen und das Geruchsemissionen die Grubenwetter unzulässig belasten.

Nach dem erfindungsgemäßen Verfahren zur Vorbereitung der Entsorgung von heißen, flüssigen Restsalzen mit unterschiedlicher Viskosität werden deshalb diese an der Übergabestelle in einen sogenannten Big Bag mit einer einen inneren Körper 1 umschließenden Gefäßwandung 2 eingelassen. Nach der Füllung desselben bedarf es eines Zeitintervalls zur Abkühlung und Erstarrung der Salzmasse. In der nun vorhandenen Verpackung ist das Salz als Festkörper manipulierbar; für die Verwendung zur Einlagerung unter Tage ist diese Abfallsubstanz als Festkörper aber noch nicht geeignet.

Zur Durchführung des Verfahrens zur Vorbereitung der Entsorgung ist ein Versatzkörper mit einem beliebigen Querschnitt vorgesehen, der aus einer einen inneren Körper 1 umschließenden Gefäßwandung 2 und aus einem äußeren Behälter 3 mit einer die Gefäßwandung 2, des inneren Körpers 1 koaxial und vollflächig umschließenden äußeren Gefäßwandung 4 besteht.

Ein von der Gefäßinnenwandung 2 umschlossener Raum des inneren Körpers 1 dient der Aufnahme von belasteten Abfallsubstanzen. Der zwischen der Gefäßinnenwandung 2 und der äußeren Gefäßwandung 4 gebildete Randbereich 5 um die Gefäßinnenwandung 2 dient der Aufnahme einer Schutzmasse, die einerseits nach Einfüllung und bis zur Verfestigung derselben eine Stützfunktion für den inneren Körper 1 bildet, der durch die Gefäßwandung 2 umschlossen ist, und die andererseits einen sicheren Verschluß für die im inneren Körper 1 eingebrachte Abfallsubstanz darstellt.

Das Verfüllen des von der Gefäßwandung 2 umschlossenen Raumes erfolgt unter zur Hilfenahme eines abstützenden nicht dargestellten Stahlbehälters, der nach dem Erstarren des eingebrachten flüssigen Abfallstoffes wieder entfernt wird. Nach dem Erstarren des in flüssiger Phase eingebrachten Abfallstoffes wird zur Gewährleistung der Einlagerungsbedingungen der innere Körper 1 in einen größeren Behälter 3 eingesetzt und dort auf Abstand gebracht und zentriert. Der durch die innere Gefäßwandung 2 und die äußere Gefäßwandung 3 gebildete Randbereich 5 wird anschließend mit einer erstarrenden, zeitweise fließfähigen Schutzmasse verfüllt. Nach dem Erstarren der Schutzmasse ist die erfindungsgemäß gestaltete Einrichtung transportfähig. Der äußere Behälter 3 wird mit einem Deckel mit einer angepaßten Bauart, der mit der äußeren Gefäßwandung 4 verbunden ist, abschließend verschlossen. Zur Aufnahme des erfindungsgemäßen Versatzkörpers zwecks eines Transportes sind zwei oder mehrere Schlaufen 6 vorgesehen.

Die Schutzmasse im Randbereich 5 erfüllt die Anforderungen des sicheren Einschlusses des Abfallstoffes. Der Brandschutz ist gewährleistet, gegen die Geruchsbelastung ist der Abfallstoff gekapselt und mit seinem hohen mechanischen Widerstand kann der neu entstandene Festkörper die geforderte Stützfunktion im Grubengebäude übernehmen.

Dem erfinderischen Vorschlag entsprechend ist die Abfallkonditionierung gegenüber der bisherigen Verwendung von Stahlbehältern erheblich kostengünstiger. Als Material für die Schutzmasse im Randbereich 5 ist vorteilhaft, d.h. Abfallstoffe, von denen keine Gefährdungen für Umwelt und Gesundheit ausgehen, einzusetzen.

### Bezugszeichenaufstellung

- 1: innerer Körper
- 2: Gefäßwandung des inneren Big Bag
- 3: äußerer Behälter
- 4: Gefäßwandung des äußeren Behälters
- 5: Randbereich
- 6: Schlaufen

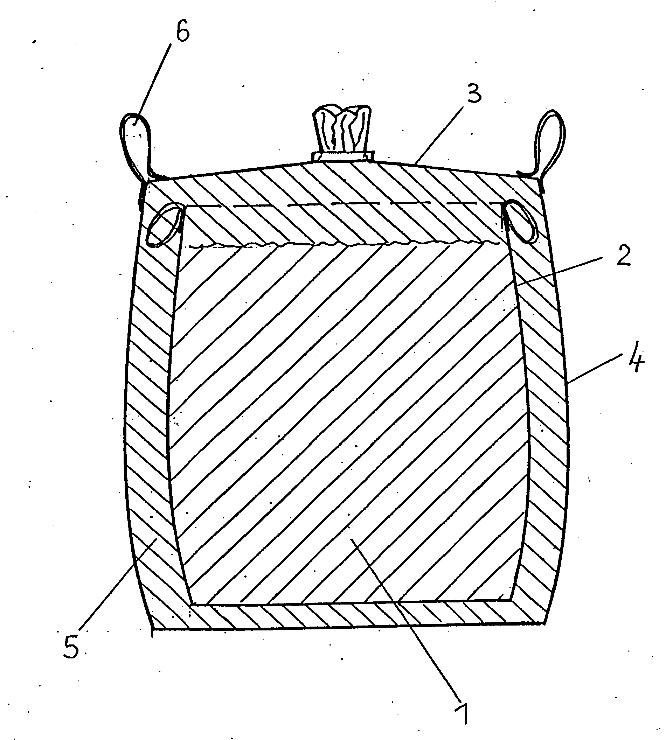

## Patentansprüche

1. Verfahren zur Vorbereitung einer Entsorgung von in einer flüssigen Phase anfallenden Abfallstoffen, von denen eine Gefahr für die Umwelt wegen einer Brandgefahr, einer Geruchsbelästigung und/oder für die Gesundheit ausgeht, ***dadurch gekennzeichnet,* daß** die in einer flüssigen Phase anfallenden Abfallstoffe in einem durch einen formfesten Behälter abgestützten flexiblen inneren Big Bag mit einer Wandung (2) verfüllt werden, nach Erstarren des eingebrachten Abfallstoffes der entstandene innere Körper (1) in einen flexiblen durch die Gefäßwandung (4) umschlossenen äußeren Behälter (3) mit einem gegenüber dem inneren Körper (1) größeren Abmessungen eingebracht und in diesem der innere Körper (1) in einem definierten Abstand zum äußeren Behälter (3) zentriert wird und anschließend der den inneren Körper (1) umschließende Randbereich (5) zwischen der Gefäßwandung (4) des äußeren Behälters (3) und der Gefäßwandung (2) des inneren Körpers (1) nach dem Verschließen des äußeren Behälters (3) mit einer zu einer formstabilen, den inneren Körper (1) vollständig einschließenden Ummantelung erstarrenden, zeitbegrenzt fließfähigen Schutzmasse verfüllt wird.

2. Einrichtung zur Realisierung des Verfahrens nach Anspruch 1, ***dadurch gekennzeichnet*, daß** diese aus einem der Aufnahme von Abfallstoffen dienenden inneren Körper (1) mit der Gefäßinnenwandung (2) und aus einem, gegenüber dem Körper (1) größeren äußeren Behälter (3) mit einer äußeren Gefäßwandung (4) besteht, wobei der innere Körper (1) gegenüber dem äußeren Behälter (3) in diesem zentriert und mit einem definierten Abstand zwischen der Gefäßwandung (2) des inneren Körpers (1) und der Gefäßwandung (4) des äußeren Behälters (3) mit einem definierten Randbereich (5) angeordnet ist und zwischen der Gefäßwandung (2) des inneren Körpers (1) und der Gefäßwandung (4) des äußeren Behälters (3) im Randbereich (5) eine den inneren Körper (1) vollständig umschließende Schutzmasse vorgesehen ist.

3. Einrichtung nach Anspruch 2, ***dadurch gekennzeichnet*, daß** der äußere Behälter (3) mit Transportschlaufen (6) versehen ist.

4. Einrichtung nach Anspruch 2, ***dadurch gekennzeichnet*, daß** nach dem Erstarren des in flüssiger Phase eingebrachten Abfallstoffes in den inneren Körper (1) mit der Wandung (2) und der in den Randbereich (5) eingebrachten Schutzmasse ein formstabiler und mechanisch belastbarer Körper vorhanden ist.

5. Einrichtung nach Anspruch 2 bis 4, ***dadurch gekennzeichnet,* daß** der Abfallstoff im Körper (1) mit der Wandung (2) aus Feststoff-Zusätzen zur flüssigen Phase des Abfallstoffes besteht.

6. Einrichtung nach Anspruch 2 bis 5, ***dadurch gekennzeichnet*, daß** das Material der Schutzmasse im Randbereich (8) aus unbelasteten Abfallstoffen oder aus einem Gemisch von diesen mit einer zeitweise fließfähigen Schutzmasse besteht.
